# EUROPEAN PATENT APPLICATION

(11) **EP 1 785 805 A2**
(43) Date of publication of application: **16.05.2007**
(21) Application number: 06020724.8
(22) Date of filing: 02.10.2006
(51) Int. Cl.: G06F 1/16

(54) **Electronic device with flexible display screen**

(30) Priority: 31.10.2005 US 263233
(71) Applicant: Hewlett-Packard Development Company, L.P., Houston, TX 77070 (US)
(72) Inventor: Solomon, Marc C., Corvallis Oregon 97330-4239 (US); Doczy, Paul J., Houston Texas 77070 (US); Massaro, Kevin L., Houston Texas 77070 (US)
(74) Representative: Schoppe, Fritz

(57) **Abstract**

An electronic device (10) comprises a plurality of support members (44, 46) coupled to each other by a fold portion (23), the fold portion (23) enabling rotational movement of the plurality of support members (44, 46) relative to each other. The electronic device (10) also comprises a flexible display screen (12) extending across the fold portion (23).

## Description

### BACKGROUND OF THE INVENTION

When purchasing computer devices, a consumer can choose from a wide array of computers, such as, but not limited to, desktop computers, laptop or notebook computers, tablet computers, and/or handheld computer devices. However, a consumer oftentimes desires particular features that are not found on any single type of device. Although the consumer may purchase multiple devices (a laptop and desktop computer), such practice is expensive and generally results in a duplication of at least some of the resources.

### BRIEF DESCRIPTION OF THE DRAWINGS

For a more complete understanding of the present invention, and the objects and advantages thereof, reference is now made to the following descriptions taken in connection with the accompanying drawings in which:

FIGURE 1A is a diagram illustrating an embodiment of an electronic device employing a flexible display screen to advantage in accordance with the present invention;

FIGURE 1B is a diagram illustrating a side view with a portion cut away of the electronic device of FIGURE 1A;

FIGURE 1C is a diagram illustrating the electronic device of FIGURE 1A in a closed position;

FIGURE 2 is a diagram illustrating the electronic device of FIGURE 1A configured for use in a desktop mode;

FIGURE 3 is a diagram illustrating the electronic device of FIGURE 1A configured for use in a tablet mode;

FIGURE 4 is a diagram illustrating another embodiment of an electronic device employing a flexible display screen to advantage in accordance with the present invention; and

FIGURE 5 is a diagram illustrating another embodiment of an electronic device employing a flexible display screen to advantage in accordance with the present invention.

### DETAILED DESCRIPTION OF THE DRAWINGS

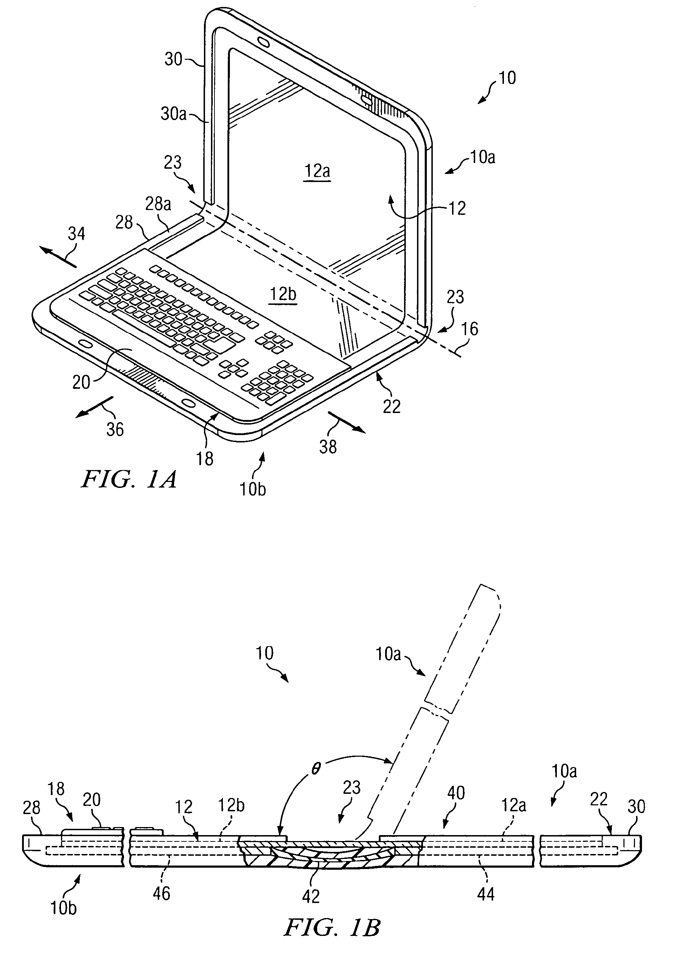

The preferred embodiments of the present invention and the advantages thereof are best understood by referring to FIGURES 1-5 of the drawings, like numerals being used for like and corresponding parts of the various drawings.

FIGURE 1A is a diagram illustrating an embodiment of an electronic device 10 employing a flexible display screen 12 to advantage in accordance with the present invention, FIGURE 1B is a diagram illustrating a side view with a portion cut away of the electronic device of FIGURE 1A, and FIGURE 1C is a diagram illustrating electronic device 10 of FIGURES 1A and 1B in a closed position. Electronic device 10 comprises a computer-type device preferably having a processor, memory, graphics module (e.g., for generating and/or controlling output of image or visual content), etc. In the embodiment illustrated in FIGURES 1A-1C, electronic device 10 is configured for use in a notebook or laptop mode. For example, in the illustrated embodiment, electronic device 10 is configured to be foldable along an axis 16 such that at least a portion 10a of electronic device 10 is movable into a generally upright or vertical position relative to a generally horizontal orientation of a remaining portion 10b of electronic device 10. In the embodiment illustrated in FIGURES 1A-1C, electronic device 10 is configured to communicatively cooperate with an input device 18, such as a wired or wireless keyboard 20. However, it should be understood that other types of input devices 18 (e.g., a mouse, microphone, etc.) and/or output devices (e.g., a printer, speaker, etc.) may be used with electronic device 10. In the embodiment illustrated in FIGURES 1A-1C, electronic device 10 is configured such that keyboard 20 is mounted to an upper surface of portion 10b of electronic device 10 (e.g., overlaying a portion of display screen 12). However, it should be understood that electronic device 10 may be otherwise configured.

In the embodiment illustrated in FIGURES 1A-1C, electronic device 10 comprises a housing 22 configured to be foldable along axis 16. In the illustrated embodiment, axis 16 is medially located relative to housing 22, thereby producing equallysized display screen 12 portions 12a and 12b (note that keyboard 20 is resting on a portion of screen portion 12b in FIGURE 1A). However, it should be understood that housing 22 may be configured to be foldable along another location and/or additional locations (e.g., non-equally-sized screen 12 portions and/or additional screen 12 portions). In some embodiments of the present invention, display screen 12 comprises a light-emitting diode (LED) matrix formed on/from an interlaced weft of conductive strands and warp of LED fibers. In the embodiment illustrated in FIGURES 1A-1C, display screen 12 is configured to display graphic and/or image content only on screen portion 12a when electronic device 10 is configured for use in the laptop mode (e.g., in response to user input of such mode of use and/or automatically in response to detecting a position of screen portion 12a relative to screen portion 12b). However, it should be understood that electronic device 10 may be otherwise configured. Further, it should be understood that keyboard 20 may be removed from housing portion 10b and used remote from electronic device 10 (e.g., wirelessly) and/or be otherwise couplable to a different location or portion of electronic device 10 (e.g., connected to another location of electronic device 10 to obtain a wired connection to electronic device 10).

Preferably, housing 22 is fabricated from a flexible material such as, but not limited to, plastic or rubber, to facilitate folding of housing 22 along axis 16. However, it should be understood that housing 22 may also be fabricated having only a portion thereof being flexible (e.g., a fold portion 23 disposed near and/or around axis 16) to facilitate folding thereof along axis 16. Preferably, housing 22 is configured to enable variable positioning of portion 10a relative to 10b (e.g., having fold portion 23 sufficiently rigid and/or having a resilient member disposed therein such that portion 10a may be fixedly located in a desired position or angle θ relative to portion 10b). In the embodiment illustrated in FIGURES 1A-1C, housing 22 comprises edge support members 28 and 30 extending about a peripheral portion of respective portions 10b and 10a of electronic device 10. Edge support members 28 and 30 are preferably configured to provide additional support and/or rigidity to portions 10b and 10a, respectively. Further, in the embodiment illustrated in FIGURES 1A-1C, edge support members 28 and 30 are each configured having a raised portion 28a and 30a, respectively, configured to be disposed against each other when electronic device 10 is disposed in a closed position (e.g., screen portion 12a facing screen 12b (FIGURE 1C)), thereby protecting display screen 12 (e.g., raised portions 28a and 30a form a gap between screen portions 12a and 12b such that screen portions 12a and 12b are separated from each other when electronic device 10 is disposed in a closed position). Further, in the embodiment illustrated in FIGURES 1A-1C, raised portion 28a is configured to align and support keyboard 20 when disposed over screen portion 12b, thereby inhibiting movement of keyboard 20 relative to housing 22 (e.g., inhibiting movement of keyboard 20 in the directions indicated by arrows 34, 36 and/or 38). Additionally, referring to FIGURE 1C, raised portions 28a and 30a form a gap between screen portions 12a and 12b, thereby providing a storage area within electronic device 10 for storage of keyboard 20 when electronic device 10 is in a closed position.

Referring to FIGURE 1B, housing 22 comprises a stiffening system 40 to support flexible display screen 12. In the embodiment illustrated in FIGURE 1B, stiffening system 40 comprises a foldable member 42 located on fold portion 23 of electronic device 10, a support member 44 located on portion 10a of electronic device 10 and a support member 46 located on portion 10b of electronic device 10. Preferably, support members 44 and 46 are fabricated from a rigid material to maintain a planar configuration of screen portions 12a and 12b, respectively. Preferably, foldable member 42 is sufficiently rigid and/or having a resilient member disposed therein such that support member 44 may be fixedly located in a desired position or angle θ relative to support member 46. It should be understood that support members 44 and 46 may be configured as separate and/or discrete elements or configured as part of edge support members 28 and 30 (i.e., formed as a single or unitary structure).

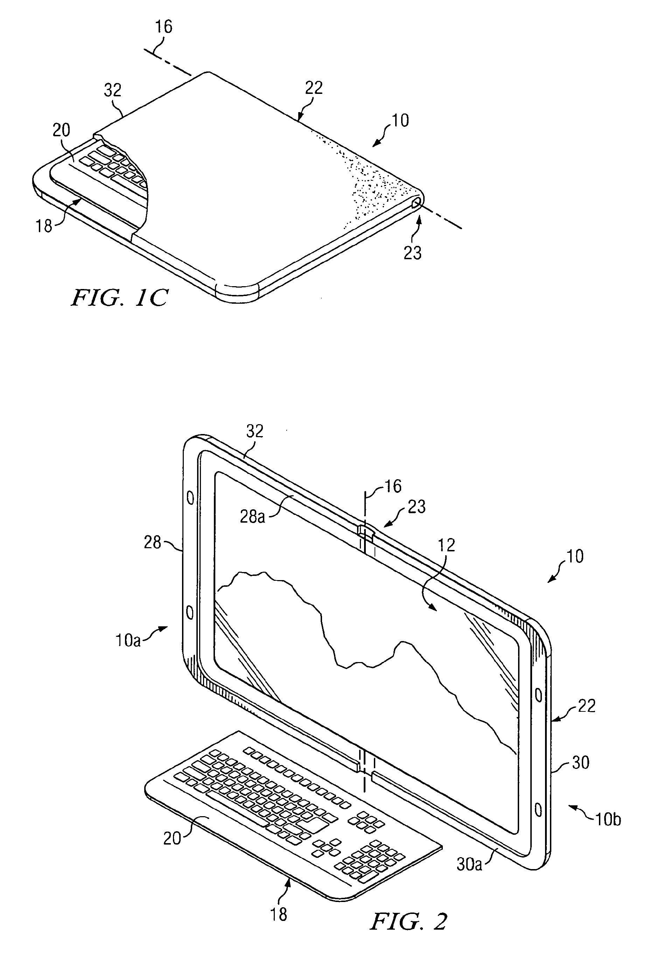

FIGURE 2 is a diagram illustrating electronic device 10 of FIGURES 1A-1C configured for use in a desktop mode. In FIGURE 2, electronic device 10 is illustrated in an open, vertical landscape orientation such that screen portions 12a and 12b are disposed in a coplanar relationship relative to each other (i.e., coplanar or substantially coplanar relative to each other). In some embodiments of the present invention, screen portions 12a and 12b are used to form a single and/or continuous image extending over both screen portions 12a and 12b. However, it should be understood that all or a portion of each screen portion 12a and/or 12b may be used to display different images. Electronic device 10 may be supported in the orientation illustrated in FIGURE 2 using a stand or other type of support element. However, it should be understood that electronic device 10 may also be positioned vertically independent of a display stand or other type of support element (e.g., by folding electronic device 10 slightly along axis 16 such that edge support members 28 and 30 vertically support electronic device 10).

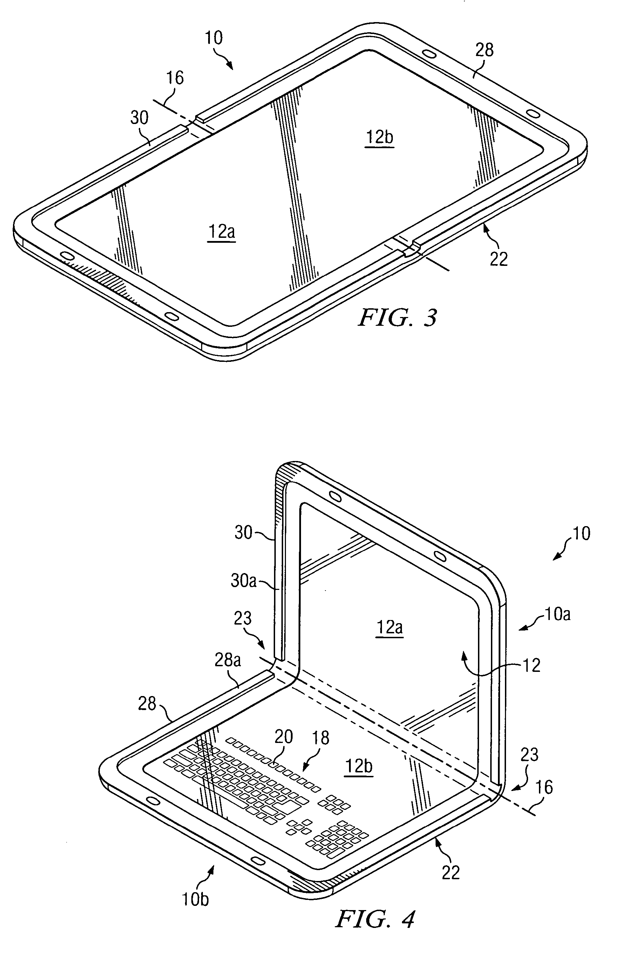

FIGURE 3 is a diagram illustrating the electronic device of FIGURES 1A-1C configured for use in a tablet mode. In the embodiment illustrated in FIGURE 3, electronic device 12 is illustrated in an open position having screen portions 12a and 12b disposed in a coplanar relationship relative to each other. For example, as described above, electronic device 10 is openable by moving or rotating edge support members 28 and/or 30 away from each other about axis 16 until screen portions 12a and 12b are disposed in a coplanar configuration. However, it should be understood that electronic device 10 may be used in a tablet mode even when screen portions 12a and 12b are not coplanar with each other. In the illustrated embodiment, display screen portion 12 also functions as input device 18 (e.g., using an electronic pen or stylus).

FIGURE 4 is a diagram illustrating another embodiment of electronic device 10 employing flexible display screen 12 to advantage in accordance with the present invention. In the embodiment illustrated in FIGURE 4, electronic device 10 is configured for use in both a laptop/notebook mode and a tablet mode. For example, in the illustrated embodiment, screen portion 12a is disposed in a generally upright position relative to screen portion 12b, thereby positioning screen members 12a and 12b in laptop/notebook-form. In this example, screen portion 12b is configured as input device 18 having an integral, touchpad keyboard 20 (e.g., keyboard 20 may be screened onto screen portion 12b or comprise a computer-generated display of a keyboard formed on screen portion 12b). Thus, in the embodiment illustrated in FIGURE 4, screen portion 12a is configured to provide graphical display output and screen portion 12b is configured to provide input to electronic device 10. However, it should be understood that screen portions 12a and/or 12b may be otherwise configured to provide input and/or output (e.g., screen portion 12a also configured to receive input (e.g., such as in a tablet mode), screen portion 12b, or a portion thereof, also providing visual output, etc.).

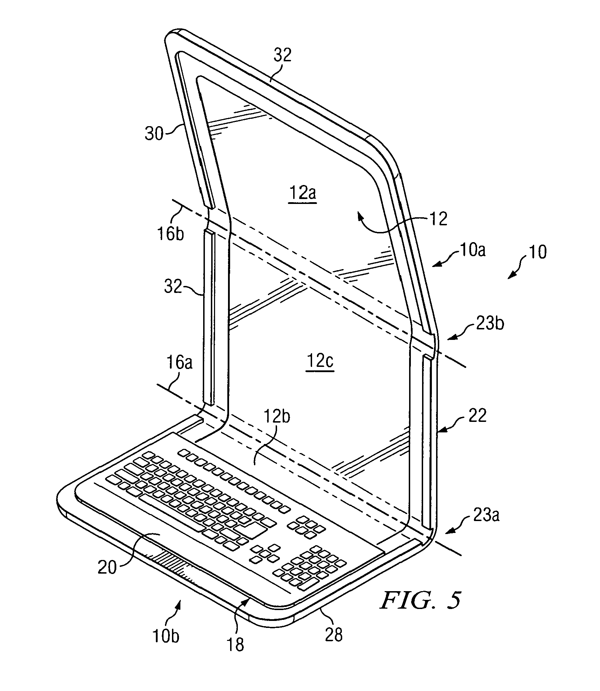

FIGURE 5 is a diagram illustrating another embodiment of electronic device 10 employing flexible display screen 12 to advantage in accordance with the present invention. In the embodiment illustrated in FIGURE 5, electronic device 10 comprises two fold portions 23a and 23b, thereby forming an additional screen portion 12c of flexible display screen 12. For example, fold portion 23a enables rotational movement of screen portions 12b and 12c relative to each other about axis 16a, and fold portion 23b enables rotational movement of screen portions 12c and 12a relative to each other about axis 16b. Note that in FIGURE 5, keyboard 20 is resting on at least a portion of screen portion 12b. Thus, in the embodiment illustrated in FIGURE 5, screen portions 12a-12c provide an increased size of viewing area for electronic device 10. Screen portions 12a-12c may be configured to operate as a single display (e.g., enabling an image to extend across all of screen portions 12a-12c and/or enabling dragging of image content from one screen portion 12a-12c to another screen portion 12a-12c), each screen portion 12a-12c may be configured to operate independently (e.g., each screen portion 12a-12c providing output corresponding to a different application (e.g., screen portion 12a for video output, screen portion 12c for word processing, and screen portion 12b for input)). Thus, it should be understood that display screen 12 may be utilized in a variety of different configurations.

In the embodiment illustrated in FIGURE 5, electronic device 10 is configured as a "tri-panel portfolio" such that electronic device 10 comprises portions 10a, 10b and 10c. Portions 10a-10c are movable about fold portions 23a and 23b relative to each other to enable portions 10a-10c to be placed generally against each other in a folded or closed position. However, it should be understood that electronic device 10 may be configured having additional portions or "panels."

Thus, embodiments of the present invention provide an electronic device 10 having a flexible display screen 12 such that electronic device 10 configurable for use in a plurality of different modes (e.g., a laptop or notebook mode, a tablet mode, a desktop or display mode, etc.).

## Claims

1. An electronic device (10), comprising:
a plurality of support members (44, 46) coupled to each other by a fold portion (23), the fold portion (23) enabling rotational movement of the plurality of support members (44, 46) relative to each other; and
a flexible display screen (12) extending across the fold portion (23).

2. The electronic device (10) of Claim 1, wherein the plurality of support members (44, 46) are movable about the fold portion (23) to form a storage area therebetween.

3. The electronic device (10) of Claim 1, wherein the plurality of support members (44, 46) are positionable to enable use of the electronic device (10) in at least one of a tablet mode, a notebook mode and a desktop mode.

4. The electronic device (10) of Claim 1, wherein the flexible display screen comprises a plurality of screen portions (12a, 12b), each screen portion configurable to independently display image content relative to another screen portion (12a, 12b).

5. The electronic device (10) of Claim 1, wherein the fold portion (23) is resiliently configured to enable fixed positioning of at least a portion of the flexible display screen (12) at a desired angle relative to another portion of the flexible display screen (12).

6. An electronic device (10), comprising:
a plurality of support means (44, 46);
a foldable means (23) enabling rotational movement of the plurality of support means (44, 46) relative to each other; and
a flexible display means extending across the foldable means (23).

7. The electronic device (10) of Claim 6, further comprising another foldable means (23), the flexible display means (12) extending across the another foldable means (23).

8. The electronic device (10) of Claim 6, wherein at least a portion of the flexible display means (12) is configured as an input means (18).

9. The electronic device (10) of Claim 6, wherein the plurality of support means (44, 46) are movable relative to each other via the foldable means (23) to form a storage area therebetween when the plurality of support means (44, 46) are disposed in a closed position relative to each other.

10. The electronic device (10) of Claim 6, wherein the foldable means (23) is configured to enable fixed positioning of at least a portion of the flexible display means (12a) at a desired angle relative to another portion of the flexible display means (12b).
